# EUROPEAN PATENT APPLICATION

(11) **EP 4 826 186 A1**
(43) Date of publication of application: **21.10.2026**
(21) Application number: 25170755.0
(22) Date of filing: 15.04.2025
(51) Int. Cl.: E04C 2/16, B32B 5/02, E04F 13/16, E04B 1/76

(54) **NOISE ABSORBING WALL ELEMENT, ASSEMBLY THEREOF AND METHOD OF FORMING A NOISE-ABSORING WALL ELEMENTS OR CEILING**

(71) Applicant: K.B.B. B.V., 1135 GC Edam (NL)
(72) Inventor: BOND, Casper Christiaan Balthazar, 1131 CA Volendam (NL)
(74) Representative: Hoyng Rokh Monegier B.V.

(57) **Abstract**

The invention relates to a secondary ceiling element with noise-absorbing properties. The invention also relates to methods of forming a secondary ceiling element with noise-absorbing properties. The secondary ceiling element is a noise-absorbing secondary ceiling element and is formed as a plate having at least two layers. A first layer (20, 21) is a substrate comprising recycled textile. The first layer has an average thickness of at least 4 mm. The recycled textile is bonded with a binder, resulting in a self-supporting layer. A second layer is a membrane (22, 23) that is laminated on top of the substrate.

## Description

The invention relates to a wall element or ceiling element for an interior wall or ceiling. The invention also relates to methods of forming a wall element and forming an assembly of wall elements. The assembly can form a ceiling.

### BACKGROUND OF THE INVENTION

Wall elements are well known and are used in the construction of interior walls and ceilings in buildings. The wall element is a tile or panel and is usually mounted on e.g. a brick wall as the most interior wall of the wall and thus acts as the wall that is visible by the user of the room. The wall element is self-supporting, which in the context of this application means that it has enough rigidity to be lifted and mounted into position maintaining its generally flat plate like shape. This allows using wall elements as a panel to be mounted onto a wall or ceiling.

Noise nuisance is a daily struggle in many people's lives. People's health and quality of life decreases drastically by excessive noise. Insulation is often used to decrease noise nuisance, coming from neighbors or other surroundings. However, only insulation is often not enough. Sound waves bounce back and forth against bare walls. In an empty room, there can be echoes. This diminishes slightly when things are placed in the room, but often the acoustics remain suboptimal.

The prior art NL2017678B1 discloses a noise absorbing wall element. This wall element comprises sheep wool. Sheep wool has many advantages. Sheep wool has unique properties, as mentioned in the prior art, such as good insulation. Sheep wool is durable. Sheep wool is relatively expensive. Sheep wool is a natural product, but the production thereof still has impact on natural resources.

So, there is a need to improve wall elements, especially wall elements formed from durable materials. An object of the invention is to provide a wall element at lower costs, preferably lower impact on natural resources. A further object of the invention is to provide a wall element with reinforcements and for allowing to form a reinforced assembly of wall elements.

### BRIEF SUMMARY OF THE INVENTION

One aspect of the present invention relates to a wall element for an interior wall or for a ceiling. The wall element can be a panel to be used as a wall or ceiling cover in interior rooms of a building. In some embodiments, the wall element is for an exterior wall.

The wall element of the invention comprises a substrate formed from recycled textile. A substrate made from recycled clothing is advantageous as the fashion industry accounts for a substantial part of global greenhouse emissions. Used textiles end up on landfills and are often burned. To make the process more sustainable, textile can be used to make other products when exceeding its lifespan as regular clothing. The easiest way to re-use old textile is to fiberize the textile. This can be used as filler in various applications. One of the applications is for construction material. The substrate of recycled textile preferably forms the self-supporting layer of the wall element. The recycled textile in the substrate can comprise the fibers of matrasses, clothing, bedding and furniture fabrics. The material of the fibers differs from batch to batch of recycled textile material. The recycled textile can comprise cotton. Old or used textile cut into smaller pieces. These smaller pieces may be fiberized. This makes the mixture of different types of textile fibers more homogenous through the wall element. Besides recycled wool, cotton has good technical properties of the wall element too. The recycled textile substrate has sound-dampening properties as the recycled textile substrate is air permeable and/or porous for air.

The beneficial properties of the substrate of recycled textile comprising at least 5%, more preferably at least 10%, cotton in wall elements can include:
- insulation: the primary function of insulation in the winter is to keep the cold out and the heat inside, in order for energy costs to remain limited; the insulating effect is also important in the summer; the heat accumulating properties of cotton are the same as traditionally used fiberglass; in summer, it therefore remains pleasantly cooler inside the construction and less thermal fluctuations in the construction are observed, reducing the risk of structural damage such as crack formation;
- Air permeability: cotton has a good breathing capacity. It makes the wall element more durable, because there is no crack formation in and in between wall elements.
- Environmentally friendly: the fibers originate from textile waste streams. The use of waste in the textile layer reduces the emission of the wall element. Moreover, producing cotton requires huge amounts of water. This water is saved by using fibers comprising cotton, instead of using newly produced cotton.
- Humidity control: cotton is known for great moisture absorption. This lowers the humidity in the surroundings. It results in a nice atmosphere in the buildings and making the buildings less susceptible for mold, which is often the result of high humidity.
- Human friendly: glass and stone fibers are commonly used for thermal insulation, filtration and noise proofing. From the viewpoint of healthcare, these fibers can cause itching/pruritus, pulmonary fibrosis and/or eczema/contact dermatitis, and may contribute to the sick building syndrome. Some types of glass wool are also known to cause cancer. The use of fibers comprising cotton originating from textile waste streams has the same characteristics as building material, but not the downsides.

**In** embodiments, the substrate of recycled textile is bonded with a binder. The formed substrate has a top and bottom side and has a thickness and circumference. The substrate can form a plate. The thickness is small with respect to the circumference. The top side is the side of the wall panel that will be turned towards the interior of the room in which the wall element is to be used. The bottom side faces e.g. the bricks of the wall of the room.

The wall element comprises the substrate from recycled textile and has at least one more layer. In embodiments, a membrane is laminated on the top side of the substrate, the membrane having a circumference. Laminating the membrane results in a strengthened fixation of that membrane to the substrate, increasing the self-supporting properties of the wall element. The membrane is preferably a flexible sheet. This allows laminating. The membrane is air-permeable or air porous.

In embodiments, at least a part of the circumference of the membrane is positioned at a distance of at least 1 cm inward from at least a part of the circumference of the substrate to form an uncovered strip of at least 1 cm wide along and between the circumferences. The circumference of the membrane is positioned inwards from the circumference of the recycled clothing substrate. In preferred embodiments, the uncovered strip extends along at least one side of the top side of the wall element. It is preferred to form the substrate and membrane rectangular. In embodiments, the uncovered strip extends along the four sides of the top surface of the rectangular wall element. Wall elements, for side walls and for ceiling having a rectangular shape allow easy tiling, thereby resulting a full cover of the side wall / ceiling. The uncovered strip can be at least 1.5cm wide along one or each side of the rectangular or square wall element. In embodiments the uncovered strip is at least 2 cm wide over the entire length of at least one side of the wall element. The uncovered stroke can extend along the circumference for at least 10 cm, preferably at least 15cm, more preferably at least 20cm. In embodiments, the wall element having substrate and laminated membrane have an uncovered stroke that is at least 1.5 cm wide and at least 10 cm, preferably at least 15cm, more preferably at least 20cm long, in a direction along the circumference.

As will be explained in more detail below, the uncovered strip allows applying a further membrane strip when connecting a first wall panel with a second adjacent panel. This further membrane strip thereby allows providing a strengthening connection across adjacent wall panels. The uncovered strip allows positioning a membrane, with the additional membrane not adding to the overall thickness of the wall element, in particular when a similar membrane is used for the membrane strip as for the laminated membrane. Preferably a strip of 2.5cm-3.5cm wide is created between the membrane circumference and the substrate circumference.

In preferred embodiments, the air permeability of the membrane and/or of the recycled textile substrate and/or of the wall element with laminated membrane is between 50 - 400 m³/m²·h, measured according to ISO 9237 at a pressure difference of 200 Pa. Such air permeability is significantly higher than prior art wall elements. Air permeability of 50-400 m³/m²·h at 200Pa increases the sound absorption for 0.7 to 1000Hz according to ISO 354. The porous structure results in dampening of the sounds in the wall element. In embodiments, the air permeability of the membrane and/or of the recycled textile substrate and/or of the wall element with laminated membrane is between 60 - 360 m³/m²·h and more preferably the air permeability of the membrane and/or of the recycled textile substrate and/or of the wall element with laminated membrane is between 70 - 310 m³/m²·h.

Generally, the wall element has a flat shape extending in a length and width direction with a predetermined average thickness and surface area. A rectangular plate is preferred. The wall element can be 60, 90 or 120 centimeters wide or have a width between 50 and 130 centimeters. The panels can be 50-320cm, preferably 60-310cm and more preferably 80-300cm , in length. The thickness of a wall element can be 9.5 to 35 millimeters, more preferably 10mm to 25mm.

In embodiments, the membrane includes fibres. Preferably the fibres are non-woven in the membrane. In an embodiment, the membrane is a non-woven cloth. These fibres can provide strength throughout the membrane.

In embodiments, the membrane comprises carbon or glass or plastic fibres. Such fibres can be produced and processed at low costs.

In embodiments, the membrane weighs 15-200 gram / m². Such membranes allow adding additional strength, without increasing the overall weight of the resultant wall element.

In embodiments, the membrane is formed as a fiberglass matting or fiberglass webbing. Fibreglass mattings are low-costs strengthening layers. Such fiberglass products can be laminated onto the substrate of recycled textiles.

In embodiments, the membrane is formed from a cellulose. Such cellulose membranes can be laminated onto the substrate of recycled textiles instead or additional to the fiberglass membrane.

In embodiments, the substrate of recycled textile comprises more than 30%, more preferably at least 40%, recycled clothing. In embodiments, at least 5% of the recycled textile fraction is formed by protective work clothing.

In preferred embodiments, at least 10%, more preferably at least 15% and most preferably at least 20%, of the recycled textile fraction is formed by protective work clothing. Using protective work clothing as part of the recycled clothing fraction in the substrate results in added strength of the substrate, as fibers from protective work clothing are relatively sturdier. Also, protective work clothing can comprise fire retardants, which are recycled into the substrate of recycled textile, providing fire retardant properties to the wall element. Protective work clothing is sturdy and often impregnated to protect workers from fire. By adding fibers from protective work clothing, those chemicals are recycled, and it is prevented that those chemicals are released into the atmosphere. Moreover, the resultant substrate with recycled protective work clothing will require less treatments for fire safety. As protective work clothing has more rigidity than normal everyday clothing, protective clothing is more difficult to process. Additionally or instead of using protective clothing, the substrate can be impregnated with fire retardants.

In embodiments, textile is processed to obtain textile fibres having a size of 5 to 20mm.

In an embodiment, the substrate of recycled textile has an average thickness of at least 4 mm, preferably at least 8 mm, more preferably at least 12 mm, and most preferably the thickness is 9.5 to 32 millimeters, preferably 15 to 30 millimeters.

In embodiments, the recycled textile substrate has a weight of 1500-4000 gr / m², preferably 2500-2800 gr / m², more preferably 2800-3400 gr/m². Wall elements having a substrate of recycled textile having a thickness of about 15-28 mm, preferably 16-26mm, in an embodiment about 23 mm, result in the desired weight / m².

In an embodiment, the textile fibers in the recycled clothing substrate are bound by each other by mechanically intertwining. Preferably, the mechanical intertwining comprises needlepunching or needlefelting.

In embodiments, the wall element has a width between 50 and 130 centimeters and more preferably is about 60, 90 or 120 centimeters wide, wherein preferably the wall element is 240 - 300 centimeters in length, In embodiments, the wall element has a length in the range of 35cm-95cm, preferably combined with a width of 35cm-130cm, or has a length in the range of 95cm-145cm, preferably combined with a width of 35cm-95cm. In embodiments, the wall element measures about 0,6 m × 0,6 m or 0,6 m × 1,2 m, thus having a circumference of about 2.4m or 3.6m respectively.

In an embodiment, the recycled textile substrate comprises a binder. The binder binds the textile fibers of the recycled clothing. The binder provides rigidity to the recycled textile substrate. Preferably, the binder is a low-temperature binder. This results in a liquid binder when it is heated to its melting temperature. The low-temperature binder makes it possible to reach the curing temperature without burning the fibers. The binder can comprise polyethylene terephthalate, bioplastics, polylactide, resins (e.g. epoxy), polyester, bismaleimides, vinyl esters, and polyamides. Preferably, the binder is made from recycling waste streams. More preferably, the binder comprises recycled polyethylene terephthalate (PET). Using PET or other low temperature binders sourced from waste streams lowers the resource costs. This makes noise absorbing systems affordable for more people, increasing their quality of life. Moreover, sourcing materials from waste streams results in less waste in the environment and prevents increasing waste, because new binder does not have to be made specially for the wall element.

The bottom side of the substrate can be covered by a membrane that is airtight or that has a very low air permeability. Such a membrane sheet can prevent, in case of e.g. water leakage, that the water penetrate the wall element or ceiling elements, which would result in degradation at the top or visible side of the wall or ceiling element. An airtight or low air permeable membrane on the bottom side also prevents the creation of degradation at the top side as a result of pressure difference at the top and bottom side of the installed wall element. The size of the bottom side membrane corresponds with the size of the substrate. The circumference of the bottom side membrane is substantially the same as the circumference of the substrate.

In embodiments, an assembly of wall elements is provided. The assembly comprises two or more wall elements. The wall elements can have any of the disclosed features herein. The wall elements can have different properties. The wall elements can e.g. have different size or different compositions. The assembly of wall elements can be the dropped ceiling in a building / in a room or can be a composed wall within a room.

In the assembly wherein two surfaces of two wall elements are generally aligned and positioned adjacent. This allows forming a generally smooth surface of top surfaces of adjacent wall elements.

In embodiments, a stroke of membrane is positioned over two adjacent uncovered strips of two adjacent top sides. The stroke can be applied on the uncovered strokes of the two adjacent wall elements. The stroke of membrane preferably has the same thickness as the laminated membrane. The resulting top surfaces are generally aligned. The stroke of membrane connects the two uncovered strips and thereby connects the two wall elements, providing overall strength to the assembly of two or more wall elements.

Preferably the stroke of membrane is air permeable. In embodiments, the stroke of membrane includes fibres, preferably non-woven, preferably a non-woven cloth. In embodiments, the stroke of membrane comprises carbon or glass or plastic fibres. In embodiments, the stroke of membrane weighs 15-200 gram / m2. In embodiments, the stroke of membrane is formed as a fiberglass matting or fiberglass webbing.

In embodiments, the wall elements are rectangular. In embodiments, the abutting circumference of adjacent wall elements forms a seam. The wall elements can have rounded edges at the circumference. The rounded edges between adjacent wall elements form a seam. In embodiments, the seam is filled by acoustic plaster or stucco.

In embodiments, the assembly forms a dropped ceiling comprising several wall elements.

To increase the noise absorbing properties, an acoustic stucco or plaster is used as a further layer on wall element, preferably the assembly of wall elements. This stucco or plaster will have a hollow or porous structure, which dampens the reflection of noise waves off the walls. This composition ensures good acoustics in the room and reduces noise pollution. Because of the use of cheaper materials, it is more affordable for consumers. Furthermore, recycled materials are used, which is good for the circular economy. It also prevents more textiles from being burned in landfills.

In embodiments, the acoustic plaster or stucco layer forms the layer of the wall element that is turned to the viewer, that is towards the interior of the room. In embodiments, the stucco or plaster is not covered by a further layer and the stucco/plaster layer will be the visible layer of the finished wall or ceiling.

The acoustic stucco or plaster forms the layer of the end product that is turned to the viewer. The acoustic stucco or plaster increases the noise absorbing properties of the wall element. This makes a room reverberate less, there is less nuisance for neighbors. Overall, the quality of life in general goes up for the consumer. It can also be used in rooms and/or buildings, where acoustics are of great importance. Buildings that fall under this include theaters, music bars, cinemas, etc. It can also make the working environment more pleasant, for example, in factory halls where machines make very high levels of noise. This makes workers less likely to suffer serious hearing damage.

In embodiments, the acoustic plaster comprises perlite, glass particles such as glass splinters or air permeable spheres. The perlite/air permeable spheres have a diameter between 0.001 and 10 mm, preferably between 0.03 and 2 mm. Perlite/glass splinters/air permeable spheres is technical characterized as hollow. This results in the stucco or plaster having an optimal air permeability, which creates good acoustic properties.

In embodiments, the acoustic plaster comprises marble polish. The marble polish has a diameter between 0.001 and 10 mm, preferably between 0.03 and 2 mm. The hollow nature of marble polish is a key technological feature in this application. The hollowness of the marble polish in the stucco or plaster results in optimal air permeability, which creates good acoustic properties.

The layer of stucco or plaster is typically fabricated by spraying, even spreading of the material and subsequent polishing. Depending on the desired properties of the final product, this sequence of steps - spraying, spreading and polishing - is carried out once, twice or three times. The stucco can also be evenly spread on the layer comprising textile fibers and binder with other tools. For example; a paintbrush, a roller, spackle knife, plasterer's spatula, etc..

In embodiments, the acoustic plaster or stucco covers the membrane and the stroke of membrane.

A further aspect of the invention is providing a method of forming a wall element. The wall element can be formed with any of the previous features. In embodiments the method comprises providing textile, preferably comprising protective work clothing and providing a binder.

To form the recycled textile substrate of the wall element, preferably comprising protective work clothing, old textile is processed to obtain textile fibers or chips. In embodiments of the method is directed at recycling clothing. The textile is processed the textile to obtain textile fibers.

Those textile fibers are mixed with the binder. This is mixed until the fibers are even distributed through the liquid binder. In embodiments the binder includes polyethylene (PE), polyethylene terephthalate (PET), preferably from PET bottles. For recycling the PET bottles are processed to obtain binder chips. If the binder is sourced from waste streams, the binder material is shredded into small pieces. This saves energy when heating the binder. Before adding the fibers, the binder is heated up to its melting temperature. This forms a viscose liquid to which the fibers are added.

In embodiments, the method comprises mixing textile fibers and binder and heating the mixture. In embodiments, the method comprises curing the mixture to form a substrate of recycled textile. The curing and forming of the substrate can comprise forming layers from the mixture paste in an oven. The substrate forming can comprises needle punching for intertwining textile fibers. The substrate forming can comprise rolling to flatten the substrate.

After mixing, a layer is formed of a desired thickness, which can be between about 2 to 15 cm, preferably around 8 cm. After reaching the desired thickness, the formed plate comprising binder and recycled textile fibers is put in a heated mold or heated rolling machine. The mold or rolling machine is heated to a temperature above the curing temperature of the used binder. Typically, this is between 100 °C and 400 °C degrees Celsius, preferably between 150 °C and 300 °C degrees Celsius, more preferably between 175 °C and 225 °C. Using a mold or rolling machine that is heated up to above the curing temperature of the binder makes the outer layer of the layer comprising recycled textile fibers and binder harder than the inner layer, due to reduced heat penetration to the core of the layer. The difference in rigidity throughout the layer comprising recycled textile fibers and binder adds strength without increasing the risk of cracking. Furthermore, it decreases the thickness of the layer by more than 50%.

After heating, the mixture of recycled textile and binder is cured to form a wall-shaped substrate of recycled textile having a top and bottom side and having a circumference. As part of the curing process, the heated layer comprising recycled textile fibers and binder is cooled off, e.g. in a cooled mold or rolling machine. The obtained substrate of recycled textile with binder has advantageous acoustic sound dampening properties. A step of shaping the circumference, e.g. by cutting, can be part of the method. This allows obtaining substrate of the desired size and having the desired circumference.

Embodiments of the method include forming and densifying the substrate of recycled textile in mold or by rolling in a rolling machine. The rolling may be part of heating or part of cooling of the substrate. By pressurizing the heated mixture of textiles and binder, increased density is obtained and the textile substrate become self-supporting.

In embodiments, the method comprises cutting the formed substrate of recycled textile in desired shapes and dimensions. By cutting, the circumference of the substrate is formed. The cutoff parts can be fed to the mixture of new recycled textile fibers and binders to be formed once again into a substrate of recycled textile.

In embodiments, a membrane having a circumference is provided. The membrane can be a sheet. The membrane is preferably air permeable / porous. The membrane is preferably sized to correspond with the circumference of the substrate, but slightly smaller.

Embodiments of the method include laminating the membrane on the top side of the cured substrate, wherein the circumference of the membrane is positioned at a distance of at least 1 cm inward from the circumference of the wall-shaped substrate, such that an uncovered strip is formed on the top side.

In embodiments, the laminating of the membrane sheet comprises heating the already formed substrate. In embodiments, in a first step the wall-shaped substrate is formed and in a second step the membrane is laminated on the formed wall-shaped substrate. The same rolling method can be used for both the first and second step.

In embodiment, a further membrane is laminated onto the bottom side of the cured substrate. The membrane on the top side is air permeable according to any of the embodiments disclosed herein, resulting in sound dampening properties of the side of the wall element facing the inside of the room. The top side membrane preferably is a fiberglass matting. The membrane on the bottom side of the substrate is significantly lower in air permeability, preferably has no air permeability. This bottom side prevents the forming of a pressure difference across the substrate. The size of the bottom side membrane corresponds with the size of the substrate.

Aspects of the invention relate to a method for forming an assembly of wall elements. This allows forming a wall in a room from wall elements or a dropped ceiling.

This method for forming an assembly can used any of the wall elements disclosed herein. The assembly can be formed from different wall elements.

Embodiments of the method include aligning two wall elements by aligning the top sides. Preferably the edges of the substrates are aligned. Preferably rectangular wall elements are used.

In embodiments, a membrane strip is applied to the uncovered strip of the two wall elements. The membrane strip connects to the uncovered strip on two sides of abutting edges of two wall elements. The membrane strip provides strength to the plate like substrates and wall elements across the assembly of wall elements. This increases the strength and durability of the formed assembly.

In embodiments, preceding the application of the membrane strip, a seam between two adjacent wall elements is filled. The method can comprise applying a layer of acoustic plaster or stucco on the wall elements. The acoustic plaster or stucco preferably includes perlite and/or marble polish and/or cellulose.

Further aspects of the invention provide a kit of parts. The kit allows forming a dropped ceiling including several wall elements according to any of the embodiments disclosed herein. The kit also includes a suspension system that allows suspending the wall elements close to the ceiling of a room where the dropped ceiling is to be installed.

In the following a preferred embodiment of the wall element will be described. It will be clear that the preferred embodiment can have more or less features as described herein.

### BRIEF DESCRIPTION OF THE DRAWINGS

Figure 1 shows an exploded view of an embodiment of assembly of wall elements.
Figure 2 schematically shows a method for forming a wall element according to an embodiment of the invention.

### DETAILED DESCRIPTION OF THE DRAWINGS

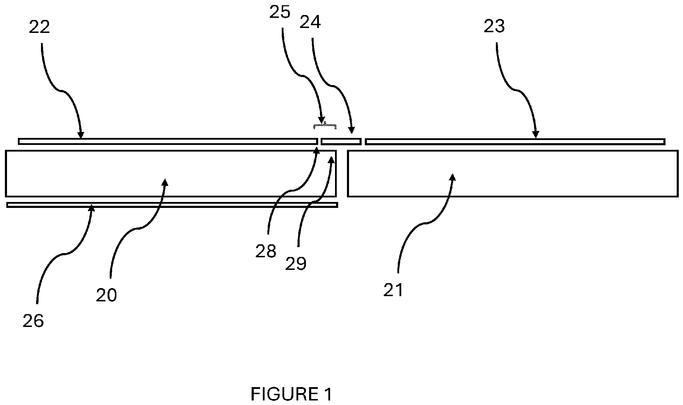

Figure 1 shows a cross section of an embodiment of an assembly of wall elements according to the invention. The wall element will be formed as a panel, mostly rectangular, e.g. 60cm wide and 240cm length. The cross-section however shows the thickness of the wall elements.

The recycled textile fibers are combined with a binder to form substrate 20,21 of about 20mm thickness. The substrates 20,21 comprises a cured mixture of binder and textile fibers from recycled clothing, preferably including a fraction of protective work clothing to add strength and fire-retardant chemicals to the substrate.

A fiberglass matting or fiberglass sheet 22 is shown. In a wall element according to the invention, the fiberglass matting is laminated on the top side of the substrate 20, which is also the top side in Figure 1.

The membrane 22 has a circumference formed by edge 28, which is less smaller than the circumference of the recycled clothing substrate formed by edge 29. The distance between the two edges 28,29 leaves an uncovered strip 25 between the membrane and the circumference of the substrate after lamination of the membrane. The width of the uncovered strip 25 can be 2.5mm-3.5mm. It can extend along a part or along the entire circumference of membrane and substrate. Preferably the uncovered strip extends at least 10 cm along the circumferences. Preferably the substrate and membrane are rectangular. Preferably, the stroke extends at least along the long side of the rectangular wall element. The uncovered stroke measures at least 2 cm wide and is at least 10 cm long along the circumferences. The uncovered stroke measures at least 2.5 cm wide and is at least 10 cm long along the circumferences. The uncovered stroke measures at least 2.5 cm wide and is at least 15 cm long along the circumferences.

An adjacent wall element abuts with one side the side of the wall element. The two abutting sides can form a seam at the top side. In FIG.1 such a seam, e.g. formed by rounded edges 29 of the substrates 20,21, are not shown. The adjacent wall element also has a substrate 21 and a membrane 23 laminated thereon. The membrane is relatively thin compared to the thickness of the substrate.

A stroke of membrane 24 can be fixed to the uncovered strip 25 of the both adjacent wall elements. A suitable fixation, glue or the like can be used. The seam, if present between adjacent edges 29, can be filled by stucco or plaster.

The membranes 22,23 provide strength to respective wall elements. The stroke of membrane 24 connecting two adjacent wall elements, provides strength to the assembly of wall elements. In use, the assembly can form a dropped or secondary ceiling and the strokes of membrane result in strengthening the entire secondary ceiling, making it more wear resistant.

Membranes 22,23 and stroke 24 can be formed from a fiberglass matting, preferfably as a non-woven. Preferably the membranes 22,23 and 24 have a similar thickness.

For connecting the stroke 24, but also to cover the top side of the wall element, an acoustic stucco or plaster comprising hollow chips, such as pertile, marble polish and other expanded building materials such a polystyrene, can be applied to the uncovered strip, to the seam between the two substrates and over the membranes 22-24. The stucco layer can be sprayed on top of the membranes.

In use, the wall element can be connected to a wall of a room. Preferably the top side of the wall element with the membrane is facing the interior of the room.

A bottom side of the membrane 20,21 can have a further membrane 26, preferably laminated to the bottom side. The membrane 26 has a lower air permeability than membrane 22,23. This prevents the formation of pressure differences across the substrate when installed.

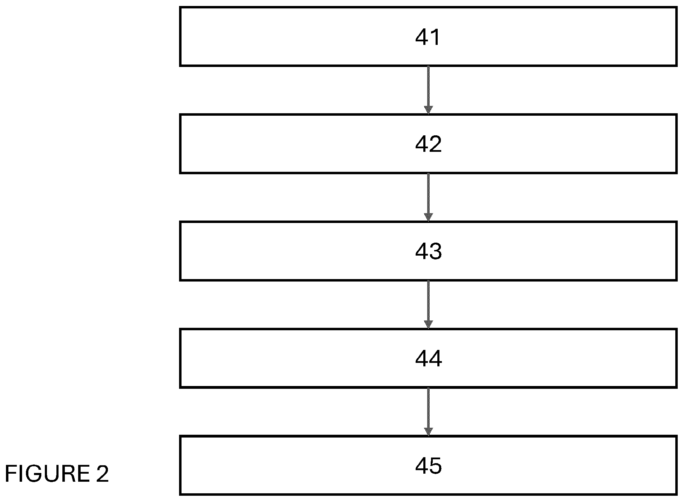

FIG. 2 shows a method of forming a wall element. The wall element can be formed with any of the previous features. In embodiments the method comprises providing textile, preferably comprising protective work clothing and providing a binder.

In step 41, the textile is processed. To form the recycled textile substrate of the wall element, preferably comprising protective work clothing, old textile is processed to obtain textile fibers or chips. Embodiments of the method are directed at recycling clothing. The textile is processed 41 the textile to obtain textile fibers.

In step 42, the textile fibers are mixed with the binder. This is mixed until the fibers are even distributed through the liquid binder. In embodiments the binder includes polyethylene (PE), polyethylene terephthalate (PET), preferably from PET bottles. Also in step 42, the mixed textile fibers and binder are heated.

In step 43, the mixture is cured to form a substrate of recycled textile. The curing and forming of the substrate can comprise forming layers from the mixture paste in an oven. Multiple layers can be formed and combined on top of each other. The substrate forming can comprises needle punching for intertwining textile fibers. The substrate forming can comprise rolling to flatten the substrate. In step 42 the layer is formed with a thickness of about 8 cm. Further in step 43, the substrate can be cut to a generally desired size with a circumference.

In a next step 44, the formed substrate comprising binder and recycled textile fibers is put in a heated mold or heated rolling machine. The mold or rolling machine is heated to a temperature above the curing temperature of the used binder. Typically, this is between 100 °C and 400 °C degrees Celsius. Using a mold or rolling machine that is heated up to above the curing temperature of the binder makes the outer layer of the layer comprising recycled textile fibers and binder harder than the inner layer, due to reduced heat penetration to the core of the layer. The difference in rigidity throughout the layer comprising recycled textile fibers and binder adds strength without increasing the risk of cracking. Furthermore, it decreases the thickness of the layer by more than 30%. This results in the textile substrate being self-supporting, not requiring a further substrate, such as wooden plates.

Still in step 44, after heating, the mixture of recycled textile and binder is cured and is cut to form a rectangular substrate of recycled textile having a top and bottom side and having a circumference. As part of the curing process, the heated layer comprising recycled textile fibers and binder is cooled off, e.g. in a cooled mold or rolling machine. The obtained substrate of recycled textile with binder has advantageous acoustic sound dampening properties. A step of shaping the circumference, e.g. by cutting, can be part of the method. The cut parts of the substrate in step 43 and 44 can be fed to the mixture of textile and binder in step 42 to be re-used.

In step 45, a fiberglass membrane is provided with a circumference. The membrane is a sheet. The membrane is air permeable / porous. The membrane is preferably sized to correspond with the circumference of the substrate, but slightly smaller than the formed substrate of step 44.

In step 45, the fiberglass membrane is laminated on the top side of the cured substrate, wherein the circumference of the membrane is positioned at a distance of at least 1 cm inward from the circumference of the wall-shaped substrate, such that an uncovered strip is formed on the top side.

The laminating of the membrane sheet comprises heating the already formed substrate. In embodiments, in a first step the wall-shaped substrate is formed and in a second step the membrane is laminated on the formed wall-shaped substrate. The same rolling method can be used for both the first and second step.

In embodiments, a further membrane is laminated onto the bottom side of the cured substrate. The membrane on the top side is air permeable according to any of the embodiments disclosed herein, resulting in sound dampening properties of the side of the wall element facing the inside of the room.

## Claims

1. A wall element for an interior wall or ceiling, wherein the wall element is formed as a self-supporting plate, the wall element comprising:
- a substrate that includes recycled textile bonded with a binder, the substrate having a top and bottom side and having a thickness and circumference; and
- a membrane laminated on the top side of the substrate, the membrane having a circumference,
wherein, on the top side of the substrate, at least a part of the circumference of the membrane is positioned at a distance of at least 1 cm inward from at least a part of the circumference of the substrate to form an uncovered strip of at least 1 cm wide along the circumferences.

2. Wall element according to claim 1, wherein the uncovered strip extends along at least one side of the top side of the wall element,
wherein preferably the substrate and membrane are rectangular,
wherein more preferably the uncovered strip extends along the four sides of the top surface of the rectangular wall element.

3. Wall element according to claim 1 or 2, wherein the membrane is a flexible sheet,
wherein the membrane preferably includes fibres, preferably non-woven, preferably a non-woven cloth,
wherein preferably the membrane comprises carbon or glass or plastic fibres,
wherein preferably the membrane weighs 15-200 gram / m².
wherein the membrane is formed as a fiberglass matting or fiberglass webbing.

4. Wall element according to any of the previous claims,
wherein the recycled textile substrate comprises at least 30% recycled textile, preferably at least 40% recycled textile, more preferably at least 50%, most preferably at least 60% recycled textile,
wherein preferably the recycled clothing substrate includes at least 5% cotton, preferably at least 10% cotton, more preferably at least 15% cotton, most preferably at least 20% cotton,
wherein the recycled textile comprises at least 5% protective work clothing, preferably at least 10% protective work clothing, more preferably at least 15% protective work clothing, most preferably at least 20% protective work clothing
wherein preferably the recycled textile substrate has a weight of 2500-2800 gr / m², preferably 2800-3400 gr/m²,
wherein more preferably the textile fibers from recycled textile are mechanically intertwined, preferably needlepunched or needlefelted, before adding the binder.

5. Wall element according to any of the previous claims, wherein the wall element is generally flat and rectangular shaped,
wherein preferably the recycled textile substrate has an average thickness of at least 4 mm, preferably at least 8 mm and more preferably at least 12 mm, and most preferably the thickness is between 15 to 30 millimeters,
wherein more preferably wall element has a width between 50 and 130 centimeters and more preferably is about 60, 90 or 120 centimeters wide, wherein preferably the wall element is 240 - 300 centimeters in length,
wherein more preferably the wall element has a length in the range of 35cm-95cm, preferably combined with a width of 35cm-130cm, or has a length in the range of 95cm-145cm, preferably combined with a width of 35cm-95cm,
wherein more preferably the wall element is about 0,6 m × 0,6 m or 0,6 m × 1,2 m.

6. Wall element according to any of the previous claims, wherein the binder is a low-temperature binder,
wherein preferably the binder comprises polyethylene terephthalate, bioplastics, polylactide, resins (e.g. epoxy), polyester, bismaleimides, vinyl esters, and polyamides,
wherein preferably the binder is made from recycling plastic waste,
wherein more preferably the binder comprises recycled polyethylene terephthalate (PET).

7. Assembly of wall elements, comprising two or more wall elements according to any of the previous claims, wherein two surfaces of two wall elements are generally aligned and positioned adjacent, wherein a stroke of membrane is positioned over and fixed to two adjacent uncovered strips of two adjacent top sides.

8. Assembly of wall elements according to claim 7, wherein the stroke of membrane includes fibres, preferably non-woven, preferably a non-woven cloth,
wherein preferably the stroke of membrane comprises carbon or glass or plastic fibres,
wherein preferably the stroke of membrane weighs 15-200 gram / m².
wherein preferably the stroke of membrane is formed as a fiberglass matting or fiberglass webbing,
wherein preferably the wall elements are rectangular, and wherein the adjacent circumference of the wall elements form a seam, wherein most preferably the seam is filled by acoustic plaster or stucco,
wherein more preferably the assembly forms a dropped ceiling comprising several wall elements.

9. Assembly of wall elements according to claim 8 or 9, wherein a layer of acoustic plaster or stucco is provided on the top side of the two wall elements,
wherein preferably the acoustic plaster or stucco comprises cellulose.
wherein the acoustic plaster or stucco forms the layer of the end product that is turned to the viewer
wherein the acoustic plaster or stucco covers the membrane and the stroke of membrane,
wherein the acoustic plaster or stucco comprises perlite, wherein preferably the perlite has diameters between 0.001 and 10 mm, more preferably between 0.03 and 2 mm
the acoustic plaster or stucco comprises marble polish, wherein preferably the marble polish has diameters between 0.001 and 10 mm, more preferably between 0.03 and 2 mm
wherein the layer of acoustic plaster or stucco is sprayed onto the substrate of recycled clothing, wherein preferably the acoustic plaster or stucco is polished.

10. Method of forming a wall element, comprising:
- providing textile,
- processing the textile to obtain textile fibers,
- providing a binder,
- providing a membrane having a circumference,
- mixing textile fibers and binder and heating the mixture,
- curing the mixture to form a wall-shaped substrate of recycled textile comprising a top and bottom side and having a circumference,
- laminating the membrane on the top side, wherein the circumference of the membrane is positioned at a distance of at least 1 cm inward from the circumference of the wall-shaped substrate, such that an uncovered strip is formed on the top side.

11. Method according to claim 10, wherein the provided textile preferably comprises protective work clothing,
wherein preferably the binder is a low-temperature binder, wherein the binder preferably includes polyethylene terephthalate (PET), more preferably PET bottles, wherein preferably the binder is processed to obtain binder chips

12. Method according to claim 10 or 11, wherein the method includes feeding the heated mixture between rolls for forming the wall-shaped substrate and/or for laminating the membrane on the top side,
wherein preferably in a first step the wall-shaped substrate is formed and in a second step the membrane is laminated on the formed wall-shaped substrate.

13. Method for forming an assembly of wall elements, comprising:
- providing wall elements according to any of the claims 10-12,
- aligning two wall elements by aligning the top sides
- applying a membrane strip onto the uncovered strip of the two wall elements.

14. Method according to claim 13, wherein preceding the application of the membrane strip, a seam between two adjacent wall elements is filled.

15. A kit of parts for a dropped ceiling including:
- several wall elements according to any of the claims 1-7 or formed according to claims 10-12; and
- parts for a suspension frame.
